# FASCICULE DE BREVET EUROPEEN

(11) **EP 2 165 433 B1**
(45) Date de publication et mention de la délivrance du brevet: **12.01.2011**
(21) Numéro de dépôt: 08826623.4
(22) Date de dépôt: 19.06.2008
(51) Int. Cl.: H04B 7/19, G01S 5/14, B64G 1/10

(54) **SYSTÈME POUR LE POSITIONNEMENT D'UN UTILISATEUR TERRESTRE**
ANORDNUNG ZUR ORTUNG EINES IRDISCHEN BENUTZERS.
SYSTEM FOR POSITIONING A TERRESTRIAL USER

(30) Priorité: 10.07.2007 FR 0704975
(43) Date de publication de la demande: 24.03.2010
(73) Titulaire: Astrium SAS, 75016 Paris (FR)
(72) Inventeur: LAINÉ, Robert, F-75015 Paris (FR)
(74) Mandataire: Bloch & Bonnétat
(86) Numéro de dépôt international: PCT/FR2008/000856
(87) Numéro de publication internationale: WO 2009/013404

(56) Documents cités:
- EP-A- 0 880 031
- EP-A- 1 777 159
- RICHTER F: "GALILEO - DIE EUROPAEISCHE SATELLITENNAVIGATION" TECHNISCHE RUNDSCHAU, EDITION COLIBRI AG., WABERN, CH, no. 5, 9 mars 2001 (2001-03-09), pages 34-38, XP001249835 ISSN: 1023-0823

## Description

La présente invention concerne les systèmes de positionnement d'un utilisateur terrestre par satellites, cet utilisateur se trouvant sur la Terre, sur la mer ou bien encore en orbite terrestre.

On sait que les systèmes de positionnement par satellites comportent une constellation de satellites de navigation placés sur des orbites de moyenne altitude (de l'ordre de 25 000 km) autour de la Terre. Ces satellites de navigation et leurs orbites sont généralement désignés dans la technique par "satellites MEO" et "orbites MEO", respectivement (Medium Earth Orbit). Les satellites de navigation sont répartis uniformément dans plusieurs plans orbitaux, de façon que, en tout point de la Terre, un utilisateur puisse voir plusieurs satellites de navigation, c'est-à-dire se trouver en lignes directes avec ceux-ci (au moins trois, mais quatre si l'utilisateur désire connaître son altitude) et en déduire ses propres coordonnées terrestres. De plus, au moins un centre de contrôle terrestre, coopérant avec des stations de communications réparties à la surface de la Terre, est prévu pour assurer le fonctionnement nominal de la constellation de satellites de navigation.

RICHTER F: "GALILEO - DIE EUROPAEISCHE SATELLITENNAVIGATION" TECHNISCHE RUNDSCHAU, EDITION COLIBRI AG., WABERN, CH, no. 5, 9 mars 2001 (2001-03-09), pages 34-36, ISSN: 1023-0823

Pour améliorer la gestion de ladite constellation de satellites de navigation, on a déjà proposé de compléter ledit centre de contrôle et lesdites stations de communication terrestres par des satellites de gestion placés sur des orbites hautes (de l'ordre de 45 000 km), aptes à gérer au moins partiellement lesdits satellites de navigation et à communiquer avec la Terre.

Il va de soi que la fabrication, la mise en place, l'utilisation et l'exploitation de tels satellites de gestion en orbites hautes représentent des coûts élevés, de sorte qu'il est avantageux de limiter le nombre desdits satellites de gestion.

L'objet de la présente invention est donc un système de positionnement terrestre permettant d'atteindre cet objectif.

A cette fin, selon l'invention, le système pour le positionnement d'un utilisateur terrestre, ledit système comportant :
- une première pluralité de satellites de navigation placés sur des orbites de moyenne altitude ; et
- une seconde pluralité de satellites de gestion placés sur des orbites hautes, aptes à gérer au moins partiellement lesdits satellites de navigation et à communiquer avec la Terre,
est remarquable en ce que :
- ladite seconde pluralité comporte un ensemble d'au moins trois satellites de gestion placés chacun sur une orbite haute, dont le plan est incliné par rapport au plan de l'équateur terrestre et coupe ce dernier suivant une droite d'intersection diamétrale par rapport à la Terre ; et
- les deux droites d'intersection diamétrales externes font entre elles un angle de longitude au moins égal à 90°.

Ainsi, on fait en sorte qu'il y ait au moins deux satellites de gestion en vue de chaque satellite de navigation, en évitant le masquage de la Terre.

Afin d'assurer la régularité des communications entre les satellites de navigation et les satellites de gestion, il est avantageux que le plan déterminé par les satellites de gestion dudit ensemble soit constamment extérieur à l'ensemble des orbites de moyenne altitude de ladite première pluralité.

En pratique, ledit angle de longitude est au plus égal à 160°, pour que lesdits satellites de gestion restent en vue de la même station de contrôle.

De préférence, les inclinaisons des plans des orbites hautes des trois satellites de gestion dudit ensemble sont identiques.

Pour réduire le nombre de stations de communications au sol, il est avantageux que les orbites hautes inclinées des satellites de gestion dudit ensemble soient géosynchrones.

En fonction du temps, les hauteurs apparentes des trois satellites de gestion, vus de l'équateur de la Terre, varient de façon sinusoïdale. Il est alors avantageux que les sinusoïdes correspondantes soit décalées d'un nombre d'heures égal à 24/n, n étant le nombre de satellites de gestion dudit ensemble.

Les figures du dessin annexé feront bien comprendre comment l'invention peut être réalisée. Sur ces figures, des références identiques désignent des éléments semblables.
La figure 1 est une vue schématique et partielle d'un système de positionnement par satellites comportant des satellites de gestion en orbites hautes.
La figure 2 montre, en vue en perspective schématique, un satellite de gestion disposé sur une orbite haute géosynchrone.
La figure 3 illustre la trajectoire du satellite de gestion de la figure 2, vue de l'équateur de la Terre.
La figure 4 est un diagramme illustrant, en fonction du temps t (en heures), la hauteur apparente, au-dessus de l'équateur, du satellite de gestion des figures 2 et 3.
La figure 5 illustre en vue en perspective, schématique et partielle, le système de positionnement à trois satellites de gestion, conforme à la présente invention.
La figure 6 montre, en vue schématique, l'ensemble des trajectoires apparentes des trois satellites de gestion du système de la figure 5.
La figure 7 est un diagramme illustrant, en fonction du temps t (en heures), l'enchevêtrement des variations sinusoïdales des hauteurs apparentes des trois satellites de gestion du système de la figure 5.

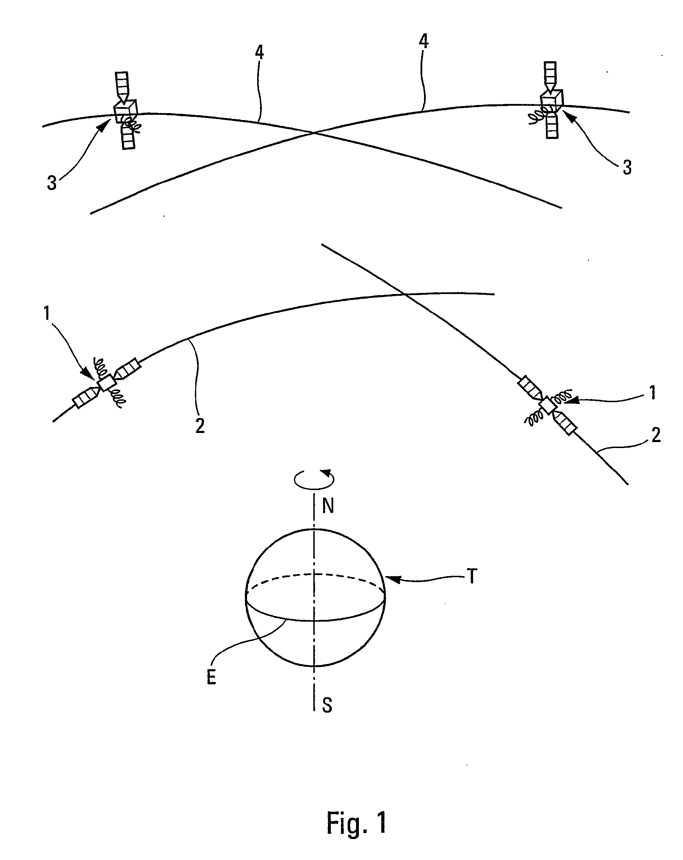

Le système de positionnement par satellites connu, représenté schématiquement et partiellement sur la figure 1, comporte :
- des satellites de navigation 1 placés sur des orbites de moyenne altitude 2 (de l'ordre de 25 000 km) autour de la Terre T ; et
- des satellites de gestion 3 placés sur des orbites hautes 4 (de l'ordre de 45 000 km) autour de la Terre T.

Par l'intermédiaire d'un centre de contrôle et de stations de communications terrestres (non représentés), lesdits satellites de gestion 3 sont aptes à gérer au moins partiellement les satellites de navigation 2, par exemple, mais non exclusivement, de la façon décrite dans la demande de brevet français n° 07 03562 déposée le 18 mai 2007 au nom de la même demanderesse.

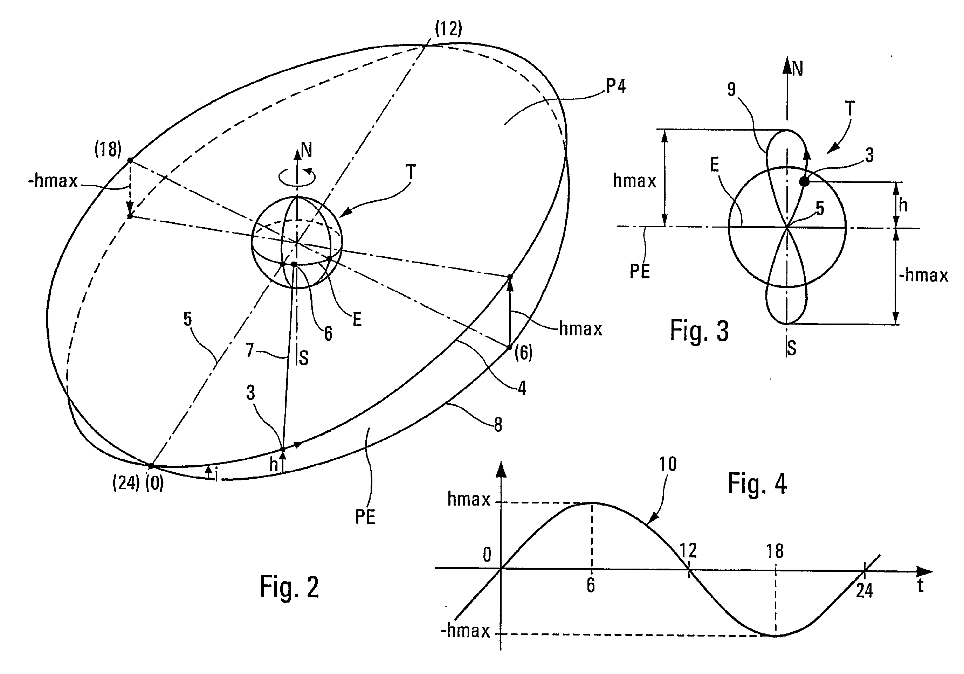

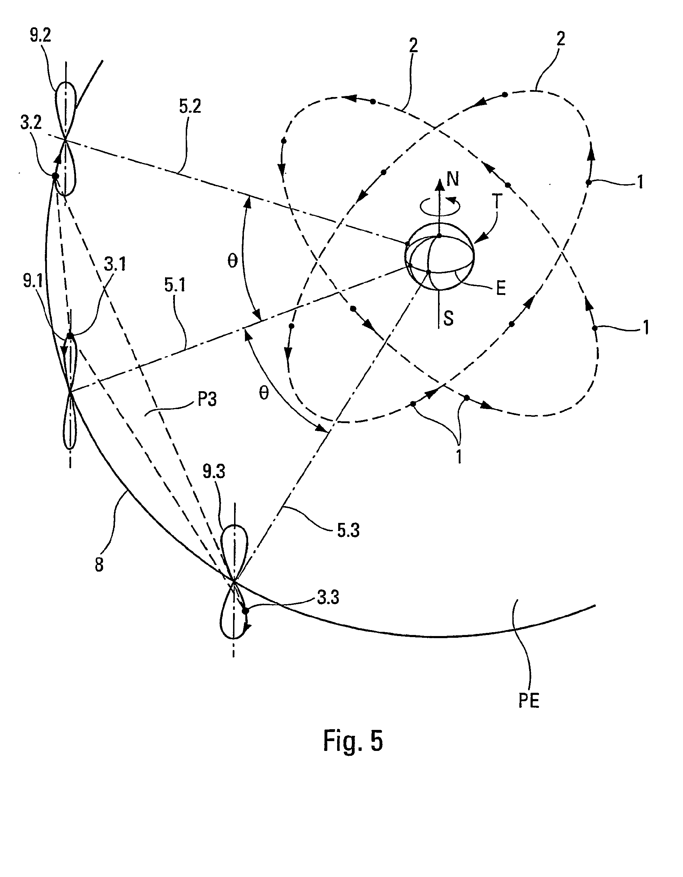

Les figures 2, 3 et 4, destinées à bien faire comprendre la présente invention décrite par la suite en regard des figures 5, 6 et 7, se rapportent à un unique satellite de gestion 3 placé sur une orbite haute 4. Dans ce cas (voir la figure 2), cette orbite haute 4 est géosynchrone et son plan P4 est incliné d'un angle d'inclinaison i par rapport au plan PE de l'équateur E. L'intersection des plans P4 et PE est une droite diamétrale 5. Sur la figure 2, on a de plus représenté :
- le point 6 de l'équateur E se trouvant dans le plan méridien terrestre passant par ledit satellite de gestion 3 et la ligne de visée 7 joignant ledit point 6 à ce dernier ; et
- l'orbite géostationnaire 8, disposée dans le plan PE de l'équateur E, de période vingt-quatre heures et de rayon égal à 42 000 km, cette orbite géostationnaire correspondant à la projection orthogonale de l'orbite haute 4 sur le plan PE.

Du fait que l'orbite haute 4 est géosynchrone, la ligne de visée 7 reste pointée sur le satellite de gestion 3, lorsque celui-ci parcourt ladite orbite haute 4 et que le point équatorial 6 tourne avec la Terre autour de l'axe Nord (N) - Sud (S) de celle-ci.

Ainsi, pour un observateur placé sur l'équateur E et apte à observer le satellite de gestion 3, la hauteur apparente h dudit satellite de gestion 3 varie de façon sinusoïdale au cours de la rotation de la terre T et dudit satellite 3, du fait que le plan P4 de l'orbite haute géosynchrone 4 est incliné par rapport au plan PE de l'équateur E. Sur la figure 4, on a représenté la sinusoïde 10 représentative de la variation de la hauteur apparente h en fonction du temps t (en heures).

Si l'on suppose, comme sur la figure 4, que le satellite de gestion 3 est aligné avec la droite diamétrale 5 à 0 heure, cette hauteur apparente h est nulle à 0 heure et à 12 heures, maximale (valeur hmax) à 6 heures et minimale (valeur -hmax) à 18 heures (voir la figure 4).

Il en résulte que, pour un observateur placé sur l'équateur E, le satellite de gestion 3 décrit une trajectoire apparente 9, en forme de huit d'axe Nord-Sud, disposée dans un plan tangent à ladite orbite haute géosynchrone 4 et comportant deux lobes symétriques dont le point de croisement est situé sur la droite d'intersection diamétrale 5 (voir la figure 3). Pour cet observateur, on peut donc considérer que le satellite de gestion 3 décrit en vingt-quatre heures la trajectoire apparente 9 autour de la droite d'intersection diamétrale 5.

Le système pour le positionnement d'un utilisateur terrestre, conforme à la présente invention et représenté sur la figure 5, comporte, outre une pluralité de satellites de navigation 1 placés sur des orbites 2 de moyenne altitude, trois satellites de gestion 3.1, 3.2 et 3.3 (semblables au satellite 3) placés chacun sur une orbite haute. Ces trois orbites hautes ne sont pas représentées pour des raisons de clarté de dessin, mais elles sont chacune semblables à l'orbite haute 4 décrite en regard de la figure 2.

Tout comme l'orbite haute 4 de la figure 2, les trois orbites hautes géosynchrones (respectivement semblables à l'orbite 4) sur lesquelles sont respectivement placés les satellites de gestion 3.1, 3.2 et 3.3 se trouvent dans des plans (respectivement semblables au plan P4) inclinés par rapport au plan PE de l'équateur E et coupent ledit plan PE suivant des droites d'intersection diamétrales 5.1, 5.2 et 5.3 (chacune semblable à la droite d'intersection diamétrale 5), respectivement. Les inclinaisons i, par rapport audit plan PE, des plans contenant les orbites hautes desdits satellites de gestion 3.1, 3.2 et 3.3 sont égales et les deux droites d'intersection diamétrales 5.2 et 5.3, qui se trouvent de part et d'autre de la droite d'intersection diamétrale intermédiaire 5.1, font avec celle-ci un angle de longitude θ au moins égal à 45° et au plus égal à 80°.

De plus, le plan P3 déterminé par les trois satellites de gestion 3.1, 3.2 et 3.3 est extérieur à l'ensemble des orbites 2 de moyenne altitude sur lesquelles sont placés les satellites de navigation 1.

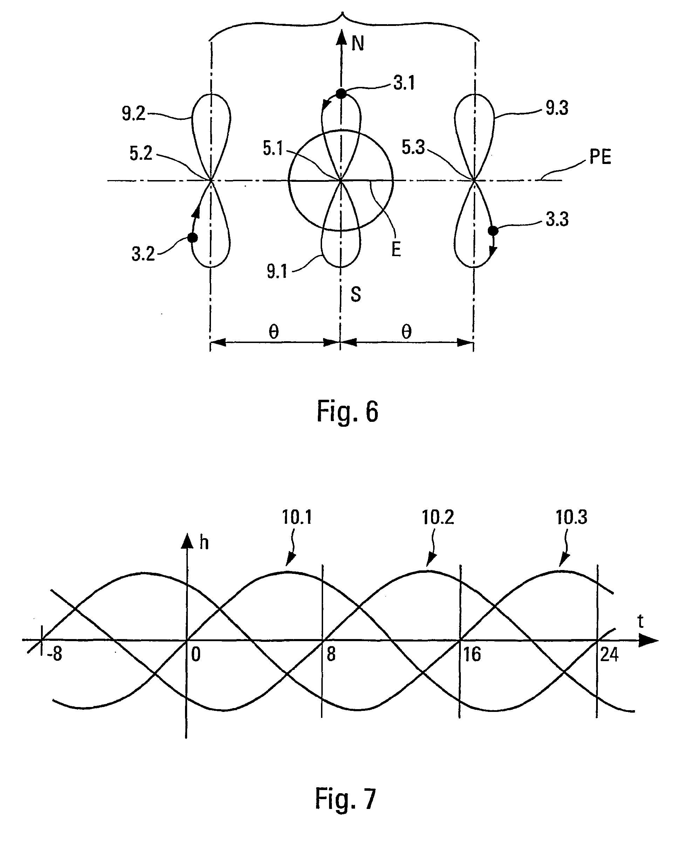

Ainsi, de façon semblable à ce qui a été expliqué ci-dessus à propos du satellite 3, chaque satellite 3.1, 3.2 et 3.3 décrit, pour un observateur placé sur l'équateur E et l'observant, une trajectoire apparente 9.1, 9.2 ou 9.3 en forme de huit, d'axe Nord-Sud et disposée dans un plan tangent à l'orbite géostationnaire 8, les deux lobes de chaque trajectoire apparente 9.1, 9.2 et 9.3 se croisant sur la droite d'intersection diamétrale 5.1, 5.2 ou 5.3, respectivement. Ceci est illustré par le schéma de la figure 6, sur laquelle on a représenté, de face, les trois trajectoires apparentes 9.1, 9.2 et 9.3.

Les hauteurs apparentes h desdits satellites de gestion 3.1, 3.2 et 3.3 varient donc de façon sinusoïdale en fonction du temps t. Sur la figure 7, on a représenté les trois sinusoïdes 10.1, 10.2, 10.3 correspondantes (chacune d'elles étant semblable à la sinusoïde 10 de la figure 4).

Dans l'exemple des figures 6 et 7, le satellite de gestion 3.2 a un retard de phase de huit heures par rapport au satellite de gestion 3.1 et une avance de phase de huit heures par rapport au satellite 3.3.

## Revendications

1. Système pour le positionnement d'un utilisateur terrestre, ledit système comportant :
- une première pluralité de satellites de navigation (1) placés sur des orbites de moyenne altitude (2) ; et
- une seconde pluralité de satellites de gestion (3) placés sur des orbites hautes (3), aptes à gérer au moins partiellement lesdits satellites de navigation (1) et à communiquer avec la Terre (T),
**caractérisé en ce que** :
- ladite seconde pluralité comporte un ensemble d'au moins trois satellites de gestion (3.1, 3.2, 3.3) placés chacun sur une orbite haute, dont le plan est incliné par rapport au plan (PE) de l'équateur terrestre (E) et coupe ce dernier suivant une droite d'intersection (5.1, 5.2, 5.3) diamétrale par rapport à la Terre (T) ; et
- les deux droites d'intersection diamétrales externes (5.2, 5.3) font entre elles un angle de longitude (2θ) au moins égal à 90°.

2. Système selon la revendication 1,
**caractérisé en ce que** le plan déterminé par les satellites de gestion (3.1, 3.2, 3.3) dudit ensemble est constamment extérieur à l'ensemble des orbites (2) de moyenne altitude de ladite première pluralité.

3. Système selon l'une des revendications 1 ou 2,
**caractérisé en ce que** ledit angle de longitude (2θ) est au plus égal à 160°.

4. Système selon l'une des revendications 1 à 3,
**caractérisé en ce que** les inclinaisons (i) des plans des orbites hautes des satellites de gestion (3.1, 3.2, 3.3) dudit ensemble sont identiques.

5. Système selon l'une des revendications 1 à 4,
**caractérisé en ce que** les orbites hautes des satellites de gestion dudit ensemble sont géosynchrones.

6. Système selon l'une des revendications 1 à 5,
**caractérisé en ce que** les hauteurs apparentes sinusoïdales (h) desdits trois satellites de gestion (3.1, 3.2, 3.3), vus de la Terre (T), sont déphasées d'un nombre d'heures égal à 24/n, n étant le nombre des satellites de gestion dudit ensemble.

## Claims

1. A system for positioning a terrestrial user, said system comprising:
- a first plurality of navigation satellites (1) placed in medium altitude orbits (2); and
- a second plurality of management satellites (3) placed in high orbits (3), able to at least partially manage said navigation satellites (1) and to communicate with the Earth (T), **characterized in that**:
- said second plurality comprises a set of at least three management satellites (3.1, 3.2, 3.3) each placed in a high orbit, whose plane is inclined with respect to the plane (PE) of the terrestrial equator (E) and cuts the latter along a diametral straight intersection line (5.1, 5.2, 5.3) with respect to the Earth (T); and
- the two external diametral straight intersection lines (5.2, 5.3) make between themselves an angle of longitude (2θ) at least equal to 90°.

2. The system as claimed in claim 1, **characterized in that** the plane determined by the management satellites (3.1, 3.2, 3.3) of said set is constantly outside the set of medium altitude orbits (2) of said first plurality.

3. The system as claimed in one of claims 1 or 2, **characterized in that** said angle of longitude (2θ) is at most equal to 160°.

4. The system as claimed in one of claims 1 to 3, **characterized in that** the inclinations (i) of the planes of the high orbits of the management satellites (3.1, 3.2, 3.3) of said set are identical.

5. The system as claimed in one of claims 1 to 4, **characterized in that** the high orbits of the management satellites of said set are geosynchronous.

6. The system as claimed in one of claims 1 to 5, **characterized in that** the sinusoidal apparent heights (h) of said three management satellites (3.1, 3.2, 3.3), viewed from the Earth (T), are out of phase by a number of hours equal to 24/n, n being the number of management satellites of said set.

## Patentansprüche

1. System zum Positionieren eines terrestrischen Benutzers, wobei das System Folgendes aufweist :
- eine erste Vielzahl von Navigationssatelliten (1), die auf Umlaufbahnen in mittlerer Höhe (2) platziert sind, und
- eine zweite Vielzahl von Verwaltungssatelliten (3), die auf hohen Umlaufbahnen (3) platziert sind, die die Navigationssatelliten (1) mindestens teilweise verwalten und mit der Erde (T) kommunizieren können,
**dadurch gekennzeichnet, dass**:
- die zweite Vielzahl von Satelliten eine Einheit aus mindestens drei Verwaltungssatelliten (3.1, 3.2, 3.3) umfasst, die jeweils auf einer hohen Umlaufbahn platziert sind, deren Ebene in Bezug zur Ebene (PE) des Äquators (E) geneigt ist und diese Letztere entlang einer Schnittgeraden (5.1, 5.2, 5.3) diametral zur Erde (T) schneidet, und
- die zwei diametralen Schnittgeraden (5.2, 5.3) untereinander einen Längenwinkel (2θ) mindestens gleich 90° bilden.

2. System nach Anspruch 1,
**dadurch gekennzeichnet, dass** die Ebene, die von den zwei Verwaltungssatelliten (3.1, 3.2, 3.3) der Einheit bestimmt wird, ständig außerhalb der Einheit der Umlaufbahnen (2) mit mittlerer Höhe der ersten Vielzahl liegt.

3. System nach einem der Ansprüche 1 oder 2,
**dadurch gekennzeichnet, dass** der Längenwinkel (2θ) maximal gleich 160° ist.

4. System nach einem der Ansprüche 1 bis 3,
**dadurch gekennzeichnet, dass** die Neigungen (i) der Ebenen der hohen Umlaufbahnen der Verwaltungssatelliten (3.1, 3.2, 3.3) der Einheit identisch sind.

5. System nach einem der Ansprüche 1 bis 4,
**dadurch gekennzeichnet, dass** die hohen Umlaufbahnen der Verwaltungssatelliten der Einheit geosynchron sind.

6. System nach einem der Ansprüche 1 bis 5, **dadurch gekennzeichnet, dass** die scheinbaren sinusförmigen Höhen (h) der drei Verwaltungssatelliten (3.1, 3.2, 3.3) von der Erde (T) aus gesehen um eine Anzahl Stunden gleich 24/n phasenverschoben sind, wobei n die Anzahl der Verwaltungssatelliten der Einheit ist.
